# EUROPEAN PATENT SPECIFICATION

(11) **EP 4 654 136 B1**
(45) Date of publication and mention of the grant of the patent: **09.09.2026**
(21) Application number: 23712051.4
(22) Date of filing: 16.01.2023
(51) Int. Cl.: G06T 11/40, G06T 5/00

(54) **METHOD FOR GENERATING A TWO-DIMENSIONAL RAPPORT**
VERFAHREN ZUR HERSTELLUNG EINES ZWEIDIMENSIONALEN ANSCHLUSSES
PROCÉDÉ DE GÉNÉRATION D'UN MOTIF DE RÉPÉTITION EN DEUX DIMENSIONS

(43) Date of publication of application: 26.11.2025
(73) Proprietor: Waixo Fashion & Digital Solutions, S.L., 48192 Gordexola (ES)
(72) Inventor: MUGUERZA TINOCO, Adolfo Prudencio, 48650 Barrika (ES)
(74) Representative: Galbaian S.Coop.
(86) International application number: PCT/ES2023/070021
(87) International publication number: WO 2024/153831

(56) References cited:
- JP-A- H02 299 900
- US-A- 5 450 533
- US-A- 6 121 975
- US-B2- 9 524 451

## Description

### TECHNICAL FIELD

The present invention relates to methods for generating a two-dimensional rapport.

### PRIOR ART

A repetition design, a modular illustration, or a pattern is a design based on the vertical (top to bottom) and horizontal (right to left) repetition of a module. There are multiple possibilities in which a module can be arranged to give rise to a modular illustration. For example, a square-shaped module can give rise to a grid when repeated vertically and horizontally, to a modular illustration with a brick design when each sequence of modules in the horizontal direction is shifted horizontally with respect to the sequence above it, or in a triplet when each sequence of modules in the vertical direction is shifted vertically with respect to the sequence to its left, among others. In addition, the modules do not necessarily have to be square-shaped, but can adopt other shapes, such as triangle, hexagon, flake, etc. Each module is also known as a repeating pattern, modular pattern or rapport. Repeating patterns can be used to be printed on any physical support, for example, fabric, paper, vinyl, wallpaper, painted paper, mugs, trays, posters, etc., although they are also used in editorial illustration or as background in web applications, among others.

One of the considerations to take into account when generating a pattern is that when repeating the rapport horizontally and vertically, the continuity of the image, drawing, design, or illustration of said rapport must be guaranteed at the joints between the different rapports that make up the pattern. For this, it is necessary that the image of the rapport has continuity in the following rapport in the sequence of rapports that compose the pattern, both vertically and horizontally.

The generation of patterns from a rapport is now known. However, there are two possibilities to make this possible. In the first one, the outline of the rapport is empty, thus guaranteeing the continuity of the image by repeating vertically and horizontally, since it would be empty. The second possibility is that the image of the rapport is designed in such a way that the part of the image in the outline of each rapport has continuity with the image of the next rapport by arranging the two into a repetition design, a modular illustration, or a pattern.

US6121975A discloses a method for forming a pattern comprising producing a repeatable individual pattern within an individual repeat to generate an overall pattern consisting of a plurality of individual patterns. The regions of motifs which project beyond the individual repeat are transferred into the individual repeat in such a way that, when forming the overall pattern, the original motifs are re-formed by joining the individual repeats containing the repeatable individual pattern, to one another, with no discontinuities therein.

US9524451B2 discloses a print data editing program which includes instructions for setting a row spacing with a disposition direction for a regular disposition of a background pattern print data in a repeated unit region. The regular disposition is adjusted to impart periodicity with respect to a predetermined unit length along a transport direction.

US5450533A discloses a method which involves using image data representing a basic figure (A). A second basic figure (B) is made from the first basic figure by dividing the first basic figure into areas (a, c) of equal sizes in a first direction, dividing each area into two small regions (b, d) in a second direction, and replacing the regions by each other. Output data representing an output figure is obtained by joining a number of the second basic figures consecutively side by side in both directions so the second basic figures are arranged in parallel rows extending in a second direction. The division ratio is determined by a ratio of the shifting distance to a length of the first basic figure in the second direction.

JP2299900A discloses a method for forming a continuous pattern by forming a plurality of photographs having a shape of an isosceles right-angled triangle or an equilateral triangle and a plurality of reversal photographs obtained by the reverse printing of said photographs and continuously arranging the photographs and the reversal photographs in succession so that patterns become mutually symmetric centering around the adjacent edges thereof.

### DISCLOSURE OF THE INVENTION

The object of the invention is to provide a computer-implemented method for generating a two-dimensional rapport starting from an image, as defined in the claims.

The computer-implemented method of the invention comprises a division step in which the image is divided into at least three portions by means of at least a first cutting line and a second cutting line, which intersect one another. Each portion comprises a part of the image and an inner contour generated by the cutting lines. The method comprises furthermore a displacement step in which the rapport is generated by displacing each portion linearly to a diametrically opposite position, such that the rapport comprises a closed contour formed by the inner contours of the portions.

Once the portions have been displaced in the displacement step, each portion is joined to each adjacent portion at a single point, said point being located on the closed contour. The method further comprises a filling step after the displacement step, in which an area arranged inside the closed contour in which there is not arranged any portion is filled with an image such that there is continuity between the image of said area and the parts of the image of the portions.

The method of the invention allows obtaining a two-dimensional rapport starting from any two-dimensional image, wherein it is not necessary for the contour of said starting image to be empty, or for the starting image to be designed such that the part of the image in the contour has continuity with the contiguous image in the case of said starting image being repeated vertically and horizontally.

These and other advantages and features of the invention will become apparent in view of the figures and detailed description of the invention.

### DESCRIPTION OF THE DRAWINGS

Figure 1 shows a blank image 1 used in a first embodiment of the method of the invention.
Figure 2 shows the rapport 2 obtained from the image 1 of Figure 1 by means of the first embodiment of the method of the invention.
Figure 3 shows an image 1 used in a second embodiment of the method of the invention.
Figure 4 shows the rapport 2 obtained from the image 1 of Figure 3 after the displacement step 102 of the second embodiment of the method.
Figure 5 shows the rapport 2 of Figure 4 after the filling step 106 of the second embodiment of the method.
Figure 6 shows a pattern obtained from the rapport 2 of Figure 5.
Figure 7b shows an image 1 used in a third embodiment of the method of the invention, and Figure 7a shows the image 1 of Figure 7b, blank in this case.
Figures 8a and 8b show the rapport 2 obtained from the image 1 of Figures 7a and 7b after the displacement step 102 of the third embodiment of the method.
Figure 9 shows the rapport 2 of Figure 8b after the filling step 106 of the third embodiment of the method.
Figure 10b shows an image 1 used in fourth and fifth embodiments of the method of the invention, and Figure 10a shows the image 1 of Figure 10b, blank in this case.
Figure 11 shows the rapport 2 obtained from the image 1 of Figure 10a after the displacement step 102 of the fourth embodiment of the method.
Figures 12a and 12b show the rapport 2 obtained from the image 1 of Figures 10a and 10b before the filling step 106 of the fourth embodiment of the method.
Figure 13 shows the rapport 2 of Figure 12b after the filling step 106 of the fourth embodiment of the method.
Figure 14 shows the rapport 2 obtained from the image 1 of Figure 10a after the displacement step 102 of the fifth embodiment of the method.
Figures 15a and 15b show the rapport 2 obtained from the image 1 of Figures 10a and 10b before the filling step 106 of the fifth embodiment of the method.
Figure 16 shows the rapport 2 of Figure 15b after the filling step 106 of the fifth embodiment of the method.
Figure 17 shows a blank image 1 used in a sixth embodiment of the method of the invention.
Figure 18 shows the rapport 2 obtained from the image 1 of Figure 17 by means of the sixth embodiment of the method of the invention.
Figure 19 shows a schematic depiction of an embodiment of the computer 500 configured to implement the method of the invention.
Figure 20 shows the flowchart of an embodiment of the method of the invention.

### DETAILED DISCLOSURE OF THE INVENTION

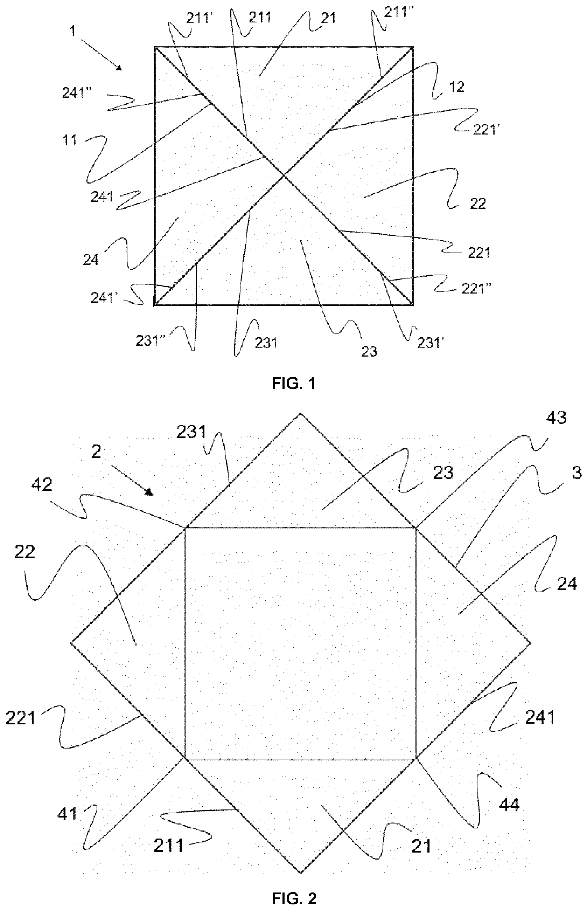

Figures 1 to 18 are related to a first, a second, a third, a fourth, a fifth, and a sixth embodiment of a computer-implemented method for generating a two-dimensional rapport 2 starting from an image 1, according to the invention.

The computer-implemented method of the invention comprises a division step 101 in which the image 1 is divided into at least three portions 21, 22, 23, 24 by means of at least a first cutting line 11 and a second cutting line 12 which intersect one another, each portion 21, 22, 23, 24 comprising a part of the image 1 and an inner contour 211, 221, 231, 241 generated by the cutting lines 11, 12, and a displacement step 102 in which the rapport 2 is generated by displacing each portion 21, 22, 23, 24 linearly to a diametrically opposite position, such that the rapport 2 comprises a closed contour 3 formed by at least part of the inner contours 211, 221, 231, 241 of portions 21, 22, 23, 24.

In the context of the invention, the image 1 is a drawing, a design, or an illustration based on which the rapport 2 will be generated, such that once said rapport 2 is repeated horizontally and vertically giving rise to a pattern, a new image inspired on the starting image 1 is represented in said pattern. The image 1 can be real or abstract, can represent objects or parts of objects, whether real or imaginary, or textures, among others.

In the context of the invention, the first cutting line 11 and the second cutting line 12 intersect one another at, at least one point of the image 1 located inside the contour of the image 1, and as a consequence divide said image 1 into at least three portions 21, 22, 23. To that end, the first cutting line 11 and the second cutting line 12 section the contour of the image 1 at two points each.

The image 1 used in the method of the invention is a two-dimensional image, therefore, said image 1 is arranged in one plane. In the context of the invention, linearly displacing portions 21, 22, 23, 24 is understood to mean translating portions 21, 22, 23, 24 over the plane in which the image 1 is arranged without the orientation of portions 21, 22, 23, 24 changing, furthermore maintaining the shape and size of said portions 21, 22, 23, 24. In other words, if a first straight line were drawn in each portion 21, 22, 23, 24 joining the two points of the contour of the image 1 defining the ends of the inner contour 211, 221, 231, 241 of said portion 21, 22, 23, 24, and if after the displacement step 102 a second straight line were drawn joining said two same points of the contour of the image 1 defining the ends of the inner contour 211, 221, 231, 241 of said same portion 21, 22, 23, 24, the first straight line and the second straight line would be two parallel straight lines.

Figure 1 shows a blank image 1 used by way of illustration in a first embodiment of the method of the invention, wherein the image 1 has a square-shaped contour. Figure 1 shows the four portions 21, 22, 23, 24 into which the image 1 has been divided in the division step 101 of the method by means of the first cutting line 11 and the second cutting line 12. The first cutting line 11 and the second cutting line 12 are straight lines which intersect one another, and which coincide with the diagonals of the square-shaped contour. Said first cutting line 11 and second cutting line 12 intersect at a point of the image 1 located inside the square-shaped contour.

In the context of the invention, inner contour 211, 221, 231, 241 of each portion 21, 22, 23, 24 denotes that part of the contour of each portion 21, 22, 23, 24 at which the contour of said portion 21, 22, 23, 24 coincides with at least the first cutting line 11 and/or the second cutting line 12. In the image 1 shown in Figure 1, the inner contour 211 of portion 21 consists of a first segment 211' wherein the contour of portion 21 coincides with the first cutting line 11, and a second segment 211" wherein the contour of portion 21 coincides with the second cutting line 12. Likewise, the inner contour 221 of portion 22 consists of a first segment 221' wherein the contour of portion 22 coincides with the second cutting line 12, and a second segment 221" wherein the contour of portion 22 coincides with the first cutting line 11. The inner contour 231 of portion 23 consists of a first segment 231' wherein the contour of portion 23 coincides with the first cutting line 11, and a second segment 231" wherein the contour of portion 23 coincides with the second cutting line 12. In the same way, the inner contour 241 of portion 24 consists of a first segment 241' wherein the contour of portion 24 coincides with the second cutting line 12, and a second segment 241" wherein the contour of portion 24 coincides with the first cutting line 11.

Figure 2 shows the arrangement of portions 21, 22, 23, 24 of the image 1 of Figure 1 once said portions have been displaced linearly to the respective diametrically opposite position in the displacement step 102. In the image 1, portion 21 is located at the top, portion 22 to the right, portion 23 at the bottom, and portion 24 to the left. Upon being linearly displaced to the respective diametrically opposite position, each portion 21, 22, 23, 24 is displaced to the position occupied by the portion 21, 22, 23, 24 facing it. In other words, portion 21 is displaced at the bottom to the position in which portion 23 was initially arranged; portion 22 is displaced to the left to the position in which portion 24 was initially arranged; portion 23 is displaced at the top to the position in which portion 21 was initially arranged; and portion 24 is displaced to the right to the position in which portion 22 was initially arranged.

In another embodiment of the method in which the image 1 is divided into an uneven number of portions, the diametrically opposite position of each portion does not correspond with the position in which another portion of the image 1 was initially arranged. For example, in an embodiment in which the image 1 is divided into three portions 21, 22, 23, upon being linearly displaced to a diametrically opposite position, portion 21 would be displaced to a position between the positions in which portion 22 and portion 23 were initially arranged; in the same way, portion 22 would be displaced to a position between the positions in which portion 21 and portion 23 were initially arranged; and portion 23 would be displaced to a position between the positions in which portion 21 and portion 22 were initially arranged.

Figure 2 shows the rapport 2 obtained from the image 1 of Figure 1 after the displacement step 102 of the first embodiment of the method of the invention. The rapport 2 obtained in said first embodiment of the method comprises a closed contour 3 formed by the inner contours 211, 221, 231, 241 of portions 21, 22, 23, 24. As shown in Figure 2, the closed contour 3 of the rapport 2 is formed by the concatenation of the inner contours 211, 221, 231, 241 of portions 21, 22, 23, 24. In said embodiment, the closed contour 3 of the obtained rapport 2 is square-shaped.

In the first embodiment of the method, in the rapport 2 obtained once portions 21, 22, 23, 24 have been displaced in the displacement step 102, each portion 21, 22, 23, 24 is joined to each adjacent portion 21, 22, 23, 24 at a single point 41, 42, 43, 44, said point 41, 42, 43, 44 being located on the closed contour 3. As shown in Figure 2, portion 21 is joined to portion 22 at only point 41, and to portion 24 at point 44. In the same way, portion 22 is joined to portion 21 at only point 41, and to portion 23 at point 42. Portion 23 is joined to portion 22 at only point 42, and to portion 24 at point 43. Lastly, portion 24 is joined to portion 23 at only point 43, and to portion 21 at point 44.

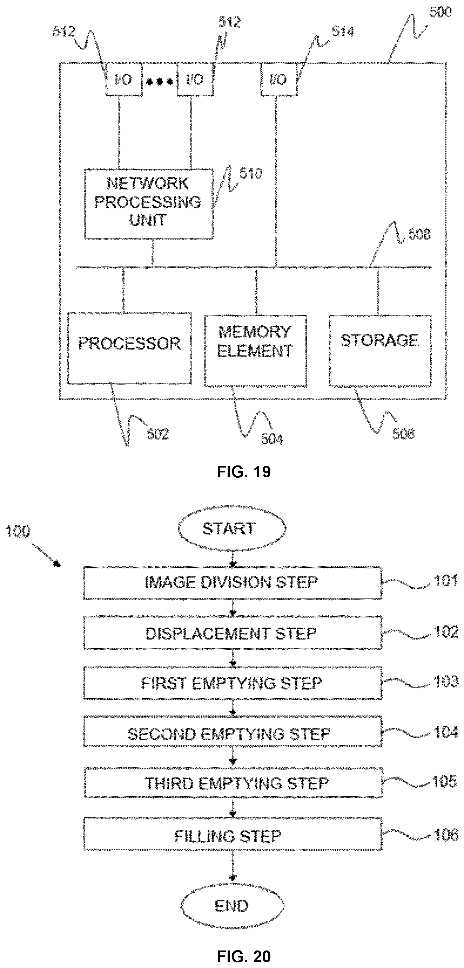

In at least one embodiment, the computer 500 used to implement the method of the invention may include one or more processors 502, one or more memory elements 504, storage 506, a bus 508, one or more network processing units 510 interconnected with one or more network input/output (I/O) interfaces 512, one or more I/O interfaces 514, and a computer program. Figure 19 shows a schematic depiction of an embodiment of the computer 500 configured to implement the method of the invention.

The computer program comprises a plurality of instructions which, when executed by the processor 502, cause the processor 502 to execute the steps of the method of the invention. In at least one embodiment, the processor or processors 502 are at least a hardware processor configured to execute various tasks, operations and/or functions for the computer 500 according to the software and/or the instructions configured for the computer 500, for example, in the computer program.

In at least one embodiment, the memory element 504 and/or storage 506 are configured to store data, information, software, and/or instructions associated with the computer 500, and/or the logic configured for the memory element 504 and/or storage 506. In an embodiment of the computer 500, the computer program is stored in any combination of memory element(s) 504 and/or storage 506.

In an embodiment of the method of the invention, the image 1 is stored in a memory element 504 and/or storage 506.

In an embodiment of the method of the invention, the generated rapport 2 is stored in a memory element 504 and/or storage 506.

In at least one embodiment, the bus 508 can be configured as an interface that enables one or more elements of the computer 500 to communicate with each other so as to exchange information and/or data. The bus 508 can be implemented with any architecture designed for exchanging control, data, and/or information between processors, memory elements/storage, peripheral devices, and/or any other hardware and/or software component that may be configured for the computer 500. In at least one embodiment, the bus 508 may be implemented as a fast kernel-hosted interconnect, potentially using shared memory between processes (for example, logic), which can enable efficient communication paths between processes.

In several embodiments, the network processor unit(s) 510 may enable communication between the computer 500 and other systems, entities, etc., through the network I/O interface(s) 512 (wired and/or wireless). In several embodiments, the network processor unit(s) 510 can be configured as a combination of hardware and/or software, as one or more Ethernet drivers and/or controllers or interface cards, fibre channel (e.g., optical) driver(s) and/or controller(s), wireless receivers/transmitters/transceivers, baseband processor(s)/modem(s) and/or other similar network interface driver(s) and/or controller(s) that are known now or may be developed hereinafter so as to enable communications between the computer 500 and other systems, entities, etc., to facilitate the operations for the various embodiments of the method described herein. In several embodiments, the network I/O interface(s) 512 can be configured as one or more Ethernet ports, fibre channel ports, any other I/O port(s) and/or antennas/antenna array that are known now or may be developed in the future. Therefore, the network processor unit(s) 510 and/or the network I/O interface(s) 512 may include suitable interfaces for receiving, transmitting, and/or otherwise communicating data and/or information in a network environment.

I/O interfaces 514 allow the input and output of data and/or information with other entities which may be connected to the computer 500. For example, the I/O interfaces 514 may provide a connection to external devices such as a keyboard, numerical keypad, a touch screen, and/or any other suitable input and/or output device that is known now or may be developed in the future. In some instances, the external devices can also include (non-transitory) computer-readable storage media such as database systems, USB memories, portable optical or magnetic discs and memory cards. In still some instances, the external devices can be a mechanism for displaying data to a user, such as a computer monitor, a display screen, or the like.

In several embodiments, the computer program can include instructions which, when executed, cause the processor or processors 502 to perform operations, which can include, among others, providing overall control operations of the computer, interacting with other entities, systems, etc. described herein, maintaining and/or interacting with stored data, information, parameters, etc. (for example, memory element(s), storage, data structures, databases, tables, etc.); combinations thereof; and/or the like so as to allow the execution of the operations necessary for the implementation of the method of the invention.

In some cases, the computer program of the present embodiments can be available via a non-transitory computer-usable storage medium (for example, magnetic or optical media, magneto-optical media, CD-ROM, DVD, memory devices, etc.). In some cases, the non-transitory computer-readable storage media can also be removable. Other examples may include optical and magnetic discs, USB memories, and smart cards which can be inserted into and/or otherwise connected to a computer to be transferred to another computer-readable storage medium.

In one embodiment, the computer program is executed in a distributed environment, i.e., part of said computer program is executed in a first computer 500, and another part is executed in a second computer, both computers 500 being communicated with one another.

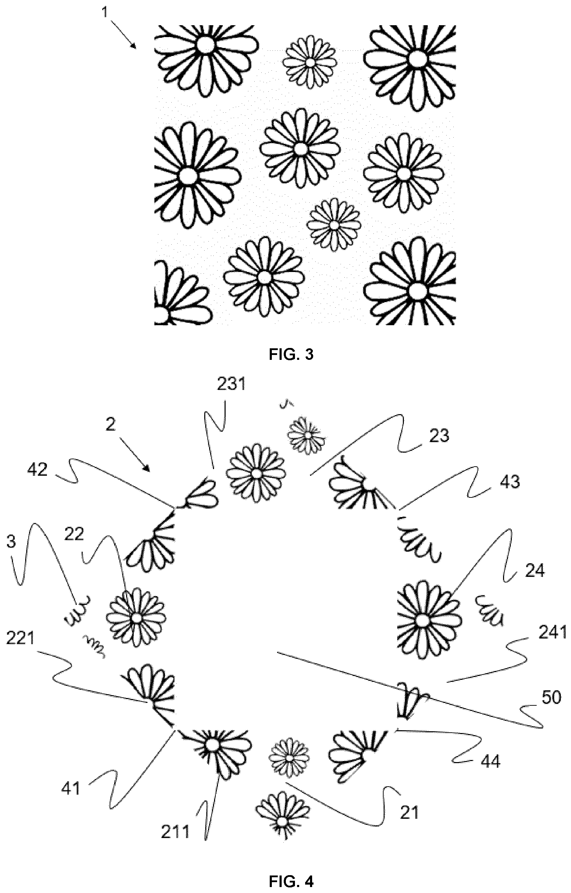

Figure 3 shows an image 1 which, like in Figure 1, has a square-shaped contour. The image 1 of this example consists of a plurality of flowers. It can further be seen that the image 1 is not a rapport, given that the missing part of each flower in the upper part of the image 1 is not in the lower part of said image 1. Part of other flowers which do not correspond with the missing part of each flower in the upper part of the image 1 is arranged in the lower part of the image 1. The image 1 of Figure 3 will be used to generate a rapport 2 in a second embodiment of the method of the invention.

In the division step 101 of the second embodiment of the method, the image 1 shown in Figure 3 is divided into four portions 21, 22, 23, 24 by means of a first cutting line 11 and a second cutting line 12, as described above for the image 1 of Figure 1. The first cutting line 11 and the second cutting line 12 are straight lines which intersect one another, and which coincide with the diagonals of the square-shaped contour. Said first cutting line 11 and second cutting line 12 intersect at a point of the image 1 located inside the square-shaped contour. Each portion 21, 22, 23, 24 comprises a part of the image 1 and an inner contour 211, 221, 231, 241 generated by the cutting lines 11, 12.

In the displacement step 102 of the second embodiment of the method of the invention, each portion 21, 22, 23, 24 is displaced linearly to a diametrically opposite position generating a rapport 2, such that the rapport 2 comprises a closed contour 3 formed by the inner contours 211, 221, 231, 241 of portions 21, 22, 23, 24, as shown in Figure 4. The closed contour 3 of the rapport 2 obtained in the second embodiment of the method is also square-shaped.

In the obtained rapport 2, once portions 21, 22, 23, 24 have been displaced in the displacement step 102 of the second embodiment of the method of the invention, each portion 21, 22, 23, 24 is joined to each adjacent portion 21, 22, 23, 24 at a single point 41, 42, 43, 44, said point 41, 42, 43, 44 being located on the closed contour 3 of the rapport 2, as shown in Figure 4. Since each portion 21, 22, 23, 24 is joined to each respective adjacent portion 21, 22, 23, 24 at a single point 41, 42, 43, 44 located on the closed contour 3, it is possible for the part of the image 1 of each portion 21, 22, 23, 24 to only have one point in common with the part of the image 1 of adjacent portions 21, 22, 23, 24 in the generated rapport 2.

In the second embodiment, the method of the invention comprises a filling step 106 after the displacement step 102 in which an area 50 arranged inside the closed contour 3 in which there is not arranged any portion 21, 22, 23, 24 is filled with an image such that there is continuity between the image of said area 50 and the parts of the image 1 of portions 21, 22, 23, 24. Figure 4 shows the rapport 2 obtained after portions 21, 22, 23, 24 are linearly displaced in the displacement step 102 of the second embodiment of the method, and having an area 50 arranged inside the closed contour 3 in which there is not arranged any portion 21, 22, 23, 24. Said area 50 is empty and shown blank in Figure 4.

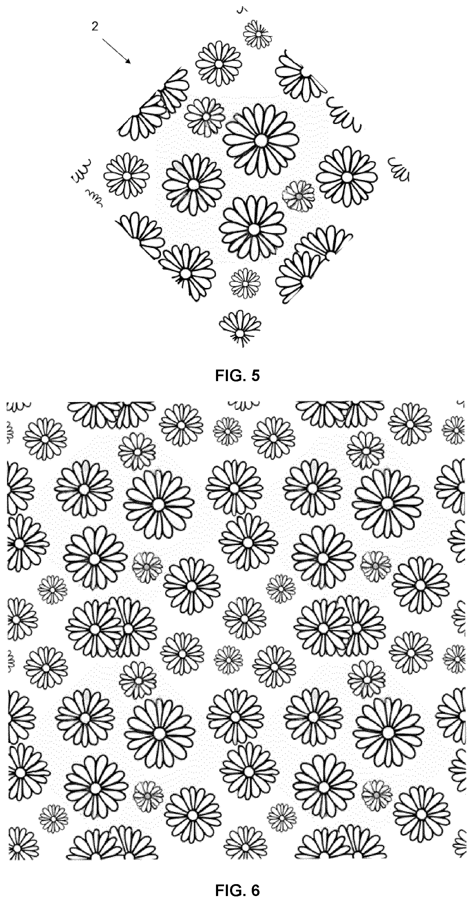

Figure 5 shows the rapport 2 of Figure 4 after the filling step 106, wherein the area 50 has been filled with an image with flowers, such that there is continuity between the image of the area 50 and the parts of the image 1 of portions 21, 22, 23, 24. The fact that, before the filling step 106, each portion 21, 22, 23, 24 is joined to each respective adjacent portion 21, 22, 23, 24 at a single point 41, 42, 43, 44 located on the closed contour 3 makes it possible for the image with which the area 50 has been filled to have continuity with the parts of the image 1 of portions 21, 22, 23, 24, given that the part of the image 1 of each portion 21, 22, 23, 24 only has one point in common with the part of the image 1 of adjacent portions 21, 22, 23, 24, and the image of the area 50 is generated such that said continuity exists.

The filling step 106 can be carried out manually, or by means of the use of a computer program. In the manual case, a graphic designer manually generates the image of the area 50 in the computer 500 used to implement the method of the invention. In the other case, the computer program comprises a plurality of instructions which, when executed by the processor 502 of the computer 500, cause the processor 502 to fill the area 50 of the rapport 2 with an image generated by means of artificial intelligence, taking into account the parts of the image 1 already existing in said rapport 2. The computer program is configured for the image generated in the area 50 to have the same context as that of the parts of the image 1 already existing in the rapport 2, such that once it is generated, there is continuity between the image of the area 50 and the parts of the image 1 in the rapport 2. There are multiple solutions on the market today with the characteristics and the functionality of the computer program, such as Dall-e 2, Stable Diffusion, or MidJourney.

In an embodiment of the method of the invention, computer program is part of computer program, computer program and computer program being stored in any combination of memory element(s) 504 and/or storage 506 of the computer 500.

In one embodiment, computer program and computer program are executed in a distributed environment. In said embodiment, computer program and computer program collaborate with one another, computer program being stored in any combination of memory element(s) 504 and/or storage 506 of the computer 500, and the computer program being stored in any combination of memory element(s) 504 and/or storage 506 of another computer 500. In said embodiment, the instructions of the computer program are executed by a processor 502 of the computer 500, and the instructions of the computer program are executed by a processor 502 of the other computer 500, both computers 500 being communicated with one another.

Figure 6 shows the pattern that is generated after repeating the rapport 2 of Figure 4 four times, twice horizontally and twice vertically.

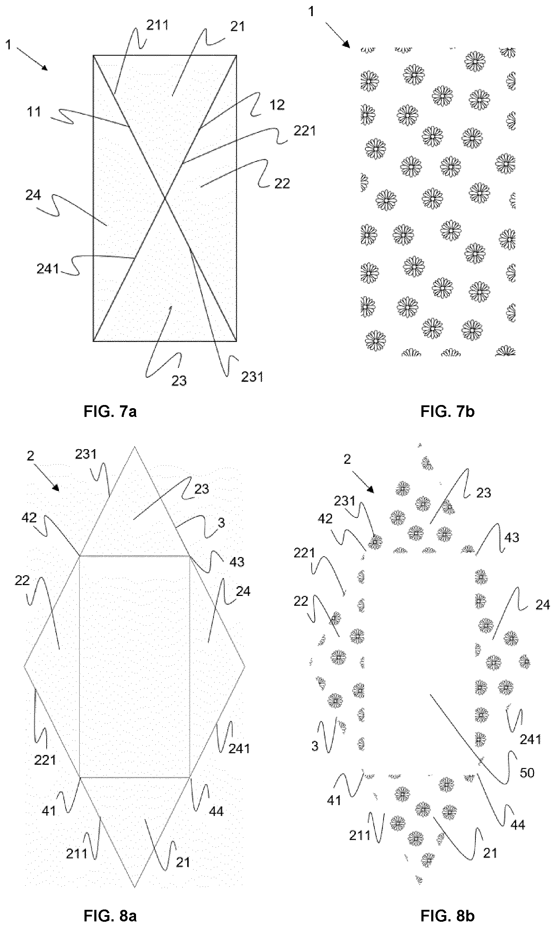

Figure 7b shows an image 1 used in a third embodiment of the method of the invention, and Figure 7a shows the image 1 of Figure 7b, blank in this case. The image 1 of Figures 7a and 7b has a rectangular-shaped contour. It can further be observed that the image 1 of Figure 7b is not a rapport. In the third embodiment of the method of the invention, the image 1 of Figure 7a is used by way of illustration of said third embodiment of the method.

In the division step 101 of the third embodiment of the method of the invention, the image 1 shown in Figures 7a and 7b is divided into four portions 21, 22, 23, 24 by means of a first cutting line 11 and a second cutting line 12. The first cutting line 11 and the second cutting line 12 are straight lines which intersect one another, and which coincide with the diagonals of the rectangle. Said first cutting line 11 and second cutting line 12 intersect at a point of the image 1 located inside the rectangular-shaped contour. Each portion 21, 22, 23, 24 comprises a part of the image 1 and an inner contour 211, 221, 231, 241 generated by the cutting lines 11, 12.

In the displacement step 102 of the third embodiment of the invention, each portion 21, 22, 23, 24 is displaced linearly to a diametrically opposite position giving rise to a rapport 2, such that the rapport 2 comprises a closed contour 3 formed by the inner contours 211, 221, 231, 241 of portions 21, 22, 23, 24, as shown in Figures 8a and 8b. The closed contour 3 of the rapport 2 obtained in the third embodiment of the method is parallelogram-shaped.

In the rapport 2 obtained once portions 21, 22, 23, 24 have been displaced in the displacement step 102 of the third embodiment of the method of the invention, each portion 21, 22, 23, 24 is joined to each adjacent portion 21, 22, 23, 24 at a single point 41, 42, 43, 44, said point 41, 42, 43, 44 being located on the closed contour 3, as shown in Figures 8a and 8b.

In the third embodiment, the method of the invention comprises a filling step 106 after the displacement step 102 in which an area 50 arranged inside the closed contour 3 in which there is not arranged any portion 21, 22, 23, 24 is filled with an image such that there is continuity between the image of said area 50 and the parts of the image 1 of portions 21, 22, 23, 24. Figures 8a and 8b show the rapport 2 obtained after portions 21, 22, 23, 24 are linearly displaced in the displacement step 102 of the third embodiment of the method, and having an area 50 arranged inside the closed contour 3 in which there is not arranged any portion 21, 22, 23, 24. Said area 50 is empty and shown blank in Figures 8a and 8b.

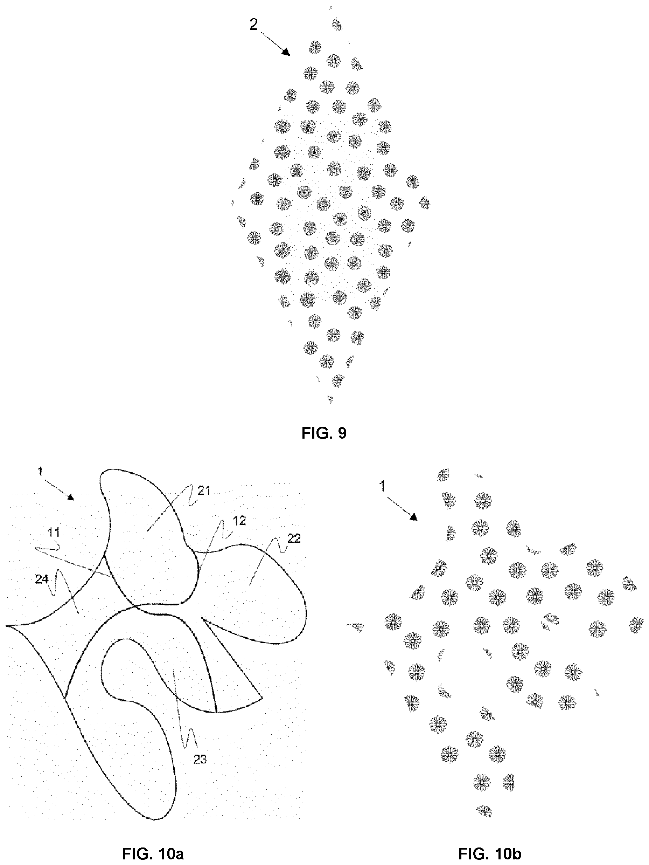

Figure 9 shows the rapport 2 of Figure 8b after the filling step 106, wherein the area 50 has been filled with an image with flowers, such that there is continuity between the image of the area 50 and the parts of the image 1 of portions 21, 22, 23, 24. By repeatedly arranging the rapport 2 of Figure 9 vertically and horizontally, a pattern will be obtained.

Figure 10b shows an image 1 used in a fourth embodiment of the method of the invention, and Figure 10a shows the image 1 of Figure 10b, blank in this case. The image 1 of Figures 10a and 10b has a curvilinear-shaped contour. In the context of the invention, the contour is understood to be curvilinear-shaped when said contour is formed by the concatenation of one or more curved lines giving rise to a closed contour. It can further be observed that the image 1 of Figure 10b is not a rapport. In the fourth embodiment of the method of the invention, the image 1 of Figure 10a is used by way of illustration of said fourth embodiment of the method.

In the division step 101 of the fourth embodiment of the method of the invention, the image 1 shown in Figures 10a and 10b is divided into four portions 21, 22, 23, 24 by means of a first cutting line 11 and a second cutting line 12. The first cutting line 11 and the second cutting line 12 are curved lines which intersect one another. Said first cutting line 11 and second cutting line 12 intersect at a point of the image 1 located inside the contour of the image 1. Each portion 21, 22, 23, 24 comprises a part of the image 1 and an inner contour 211, 221, 231, 241 generated by the cutting lines 11, 12.

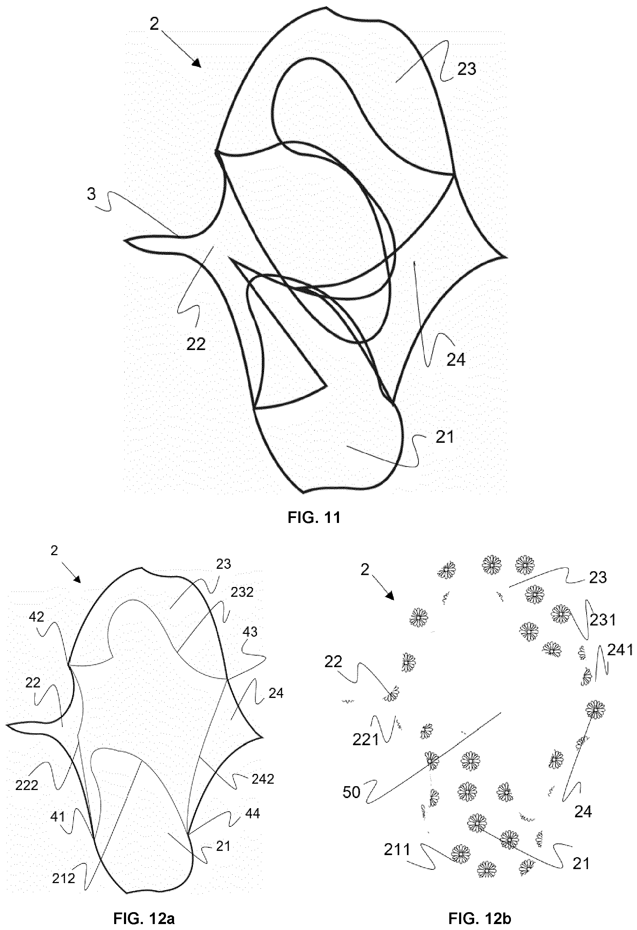

In the displacement step 102 of the fourth embodiment of the invention, each portion 21, 22, 23, 24 is displaced linearly to a diametrically opposite position giving rise to a rapport 2, such that the rapport 2 comprises a closed contour 3 formed by the inner contours 211, 221, 231, 241 of portions 21, 22, 23, 24. Figure 11 shows the rapport 2 generated from the image 1 of Figure 10a after the displacement step 102. As observed in said figure, the rapport 2 comprises a plurality of areas in which portions 21, 22, 23, 24 overlap. The closed contour 3 of the rapport 2 obtained in the fourth embodiment of the method is curvilinear-shaped.

The fourth embodiment of the method comprises a first emptying step 103 after the displacement step 102 and before the filling step 106, wherein areas of portions 21, 22, 23, 24 are emptied to prevent there from being areas of said portions 21, 22, 23, 24 overlapping one another. In the context of the invention, emptying is understood to mean removing the portion of image in the area to be emptied, such that said area will be blank in this case. The first emptying step 103 of the method makes it possible to generate rapports from an image, the contour of which can have any shape. Therefore, even though there are areas of portions 21, 22, 23, 24 overlapping one another, by means of the first emptying step 103 the overlaps between portions 21, 22, 23, 24 will be removed, making it possible, in the rapport 2 finally generated by the method of the invention, for each portion 21, 22, 23, 24 of the rapport 2 generated to be joined to each adjacent portion 21, 22, 23, 24 at a single point 41, 42, 43, 44, said point 41, 42, 43, 44 being located on the closed contour 3.

In one embodiment of the method, in the first emptying step 103 the areas of all the portions 21, 22, 23, 24 overlapping an area of another portion 21, 22, 23, 24 are emptied. In another embodiment of the method, the areas of portions 21, 22, 23, 24 overlapping an area of another portion 21, 22, 23, 24 will be emptied sequentially, until the existence of areas of portions 21, 22, 23, 24 overlapping one another is prevented.

The fourth embodiment of the method comprises a second emptying step 104 after the displacement step 102 and before the filling step 106, wherein the areas of portions 21, 22, 23, 24 that are located outside of the closed contour 3 are emptied. As observed in Figure 11, the rapport 2 generated from the image 1 of Figure 10a after the displacement step 102 comprises at least one small area of portion 23 located on the outside of the closed contour 3. Upon emptying said area located on the outside of the contour 3, the closed contour 3 is still successfully formed by at least part of the inner contours 211, 221, 231, 241 of portions 21, 22, 23, 24, thus ensuring the generated rapport 2 fitting with the adjacent rapports 2 when said rapport 2 is repeated to form a pattern. The second emptying step 104 of the method makes it possible to generate rapports 2 from an image 1 the contour of which can have any shape. Therefore, even though there are areas of portions 21, 22, 23, 24 which are arranged on the outside of the closed contour 3 once portions 21, 22, 23, 24 have been displaced in the displacement step 102, the generated rapport 2 fitting with the adjacent rapports 2 when said rapport 2 is repeated to form a pattern is ensured by means of the second emptying step 104.

The fourth embodiment of the method comprises a third emptying step 105 after the displacement step 102 and before the filling step 106, wherein at least one area of a portion 21, 22, 23, 24 located inside the closed contour 3 is emptied. Figure 12a shows the rapport 2 after the first emptying step 103, the second emptying step 104, and the third emptying step 105. As observed in said figure, areas besides the areas already emptied in the first emptying step 103 and in the second emptying step 104 have been emptied by means of the third emptying step 105. The lines 212, 222, 232, 242 represent the limit up to which each portion 21, 22, 23, 24 contains the corresponding part of the image 1. Therefore, the part of the image 1 of each portion 21, 22, 23, 24 is delimited between the inner contour 211, 221, 231, 241 and the respective limit 212, 222, 232, 242 of each portion.

The third emptying step 105 of the method makes it possible to generate rapports 2 from an image 1 the contour of which can have any shape, since by means of said third emptying step 105 it is ensured that each portion 21, 22, 23, 24 of the generated rapport 2 is joined to each adjacent portion 21, 22, 23, 24 at a single point 41, 42, 43, 44, said point 41, 42, 43, 44 being located on the closed contour 3. In some cases, the starting image 1 has a contour such that after the implementation of the first emptying step 103 and the second emptying step 104, each portion 21, 22, 23, 24 of the generated rapport 2 is joined to each adjacent portion 21, 22, 23, 24 at a single point 41, 42, 43, 44, said point 41, 42, 43, 44 being located on the closed contour 3. However, in other cases, it is necessary to implement the third emptying step 105 to ensure that each portion 21, 22, 23, 24 of the generated rapport 2 is joined to each adjacent portion 21, 22, 23, 24 at a single point 41, 42, 43, 44, said point 41, 42, 43, 44 being located on the closed contour 3. As observed in Figures 12a and 12b, in the rapport 2 obtained after the displacement step 102, and the first emptying step 103, the second emptying step 104, and the third emptying step 105, each portion 21, 22, 23, 24 is joined to each adjacent portion 21, 22, 23, 24 at a single point 41, 42, 43, 44, said point 41, 42, 43, 44 being located on the closed contour 3.

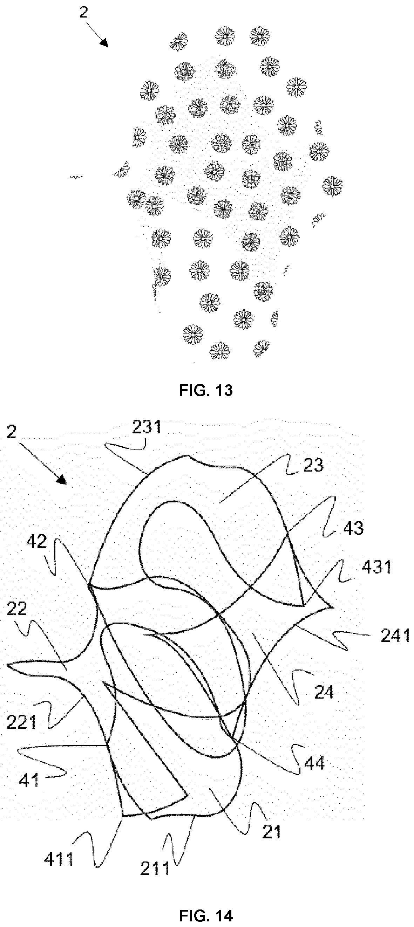

In the fourth embodiment, the method of the invention comprises a filling step 106 after the displacement step 102, and the first emptying step 103, the second emptying step 104, and the third emptying step 105 in which an area 50 arranged inside the closed contour 3 in which there is not arranged any portion 21, 22, 23, 24 is filled with an image such that there is continuity between the image of said area 50 and the parts of the image 1 of portions 21, 22, 23, 24. Figure 13 shows the rapport 2 of Figure 12b after the filling step 106, wherein the area 50 has been filled with an image, such that there is continuity between the image of the area 50 and the parts of the image 1 of portions 21, 22, 23, 24. By repeatedly arranging the rapport 2 of Figure 13 vertically and horizontally, a pattern will be obtained.

In a fifth embodiment of the method of the invention, a rapport 2 is generated starting from the same image 1 used in the fourth embodiment of the method, i.e., the image 1 shown in Figures 10a and 10b. Like in the fourth embodiment, the image 1 of Figure 10a is used by way of illustration of the fifth embodiment of the method of the invention. Like in the fourth embodiment, in the division step 101 of the fifth embodiment of the method of the invention, the image 1 shown in Figures 10a and 10b is divided into four portions 21, 22, 23, 24 by means of a first cutting line 11 and a second cutting line 12 which intersect one another in a point of the image 1 located inside the contour of the image 1. Each portion 21, 22, 23, 24 comprises a part of the image 1 and an inner contour 211, 221, 231, 241 generated by the cutting lines 11, 12.

In the displacement step 102 of the fifth embodiment of the invention, each portion 21, 22, 23, 24 is displaced linearly to a diametrically opposite position giving rise to the rapport 2, such that the rapport 2 comprises a closed contour 3 formed by the inner contours 211, 241 of portions 21, 24, and by part of the inner contours 221, 231 of portions 22, 23, as shown in Figure 14. When comparing the rapport 2 of Figure 14 obtained in the fifth embodiment of the method with the rapport 2 of Figure 11 obtained in the fourth embodiment of the method, it can be observed that in Figure 11 the inner contour 211 of portion 21 and the inner contour 221 of portion 22 coincide at the point identified as 411 in Figure 14. Point 411 belongs to the closed contour 3. However, in Figure 14 it can be observed that in the rapport 2 obtained in the fifth embodiment the inner contour 211 of portion 21 and the inner contour 221 of portion 22 coincide at point 41 of Figure 14, also located on the closed contour 3 of the rapport 2. In the same way, in the rapport 2 obtained in the fourth embodiment of the method, the inner contour 231 of portion 23 and the inner contour 241 of portion 24 coincide at the point identified as point 431 in Figure 14, whereas in the fifth embodiment the inner contour 231 of portion 23 and the inner contour 241 of portion 24 coincide at the point identified as point 43 in Figure 14, both point 43 and point 431 being located on the closed contour 3 of the rapport 2. In Figure 14 it can be observed that the shape of the portion of the inner contour 221 between point 41 and point 411 corresponds with the shape of the portion of the inner contour 231 between point 43 and point 431. For this reason, despite the fact that the closed contour 3 is not formed by the entirety of the inner contour 221 and of the contour 231, it is ensured that the resulting rapport 2, as it is repeated vertically and horizontally to form a pattern 2, fits with the adjacent rapports 2. The closed contour 3 of the rapport 2 obtained in the fifth embodiment of the method is curvilinear-shaped.

The fifth embodiment of the method comprises a first emptying step 103 after the displacement step 102 and before the filling step 106, wherein areas of portions 21, 22, 23, 24 are emptied to prevent there from being areas of said portions 21, 22, 23, 24 overlapping one another.

The fifth embodiment of the method comprises a second emptying step 104 after the displacement step 102 and before the filling step 106, wherein the areas of portions 21, 22, 23, 24 that are located outside of the closed contour 3 are emptied. As observed in Figure 14, the rapport 2 comprises at least one small area of portion 22 located on the outside of the closed contour 3. Upon emptying said area, the closed contour 3 is still successfully formed by at least part of the inner contours 211, 221, 231, 241 of portions 21, 22, 23, 24, thus ensuring the generated rapport 2 fitting with the adjacent rapports 2 when said rapport 2 is repeated to form a pattern.

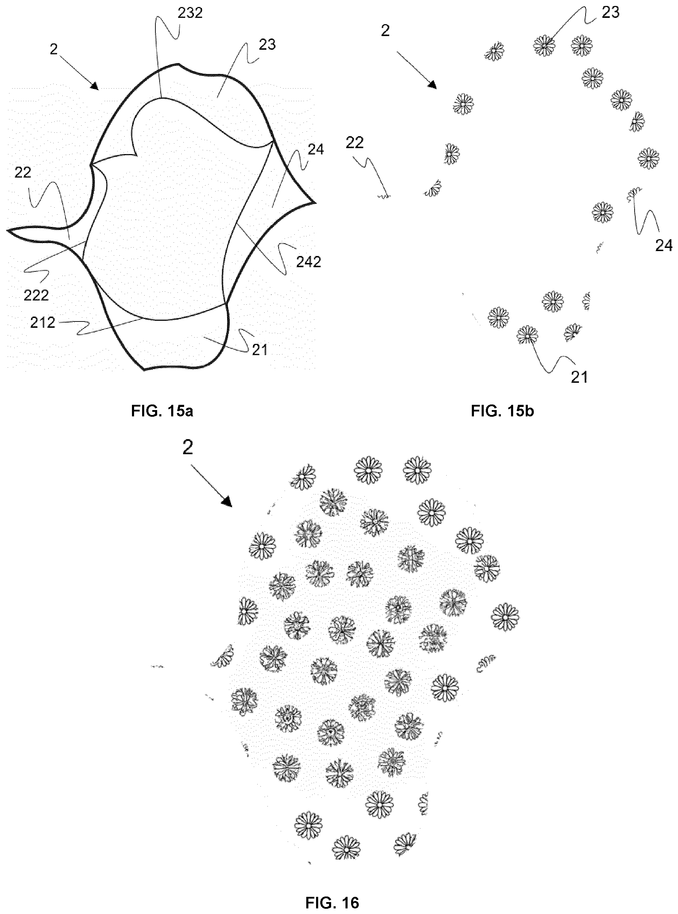

The fifth embodiment of the method comprises a third emptying step 105 after the displacement step 102 and before the filling step 106, wherein is emptied at least one area of a portion 21, 22, 23, 24 located inside the closed contour 3. Figure 15a shows the rapport 2 after the first emptying step 103, the second emptying step 104, and the third emptying step 105. As observed in said figure, areas besides the areas already emptied in the first emptying step 103 and the second emptying step 104 have been emptied by means of the third emptying step 105, which makes it possible for each portion 21, 22, 23, 24 of the generated rapport 2 to be joined to each adjacent portion 21, 22, 23, 24 at a single point 41, 42, 43, 44, said point 41, 42, 43, 44 being located on the closed contour 3.

In the fifth embodiment, the method of the invention comprises a filling step 106 after the displacement step 102, and the first emptying step 103, the second emptying step 104, and the third emptying step 105 in which an area 50 arranged inside the closed contour 3 in which there is not arranged any portion 21, 22, 23, 24 is filled with an image such that there is continuity between the image of said area 50 and the parts of the image 1 of portions 21, 22, 23, 24. Figure 16 shows the rapport 2 of Figure 15b after the filling step 106, wherein the area 50 has been filled with an image, such that there is continuity between the image of the area 50 and the parts of the remaining image 1 of portions 21, 22, 23, 24. As the rapport 2 of Figure 16 is repeatedly arranged vertically and horizontally, a pattern will be obtained.

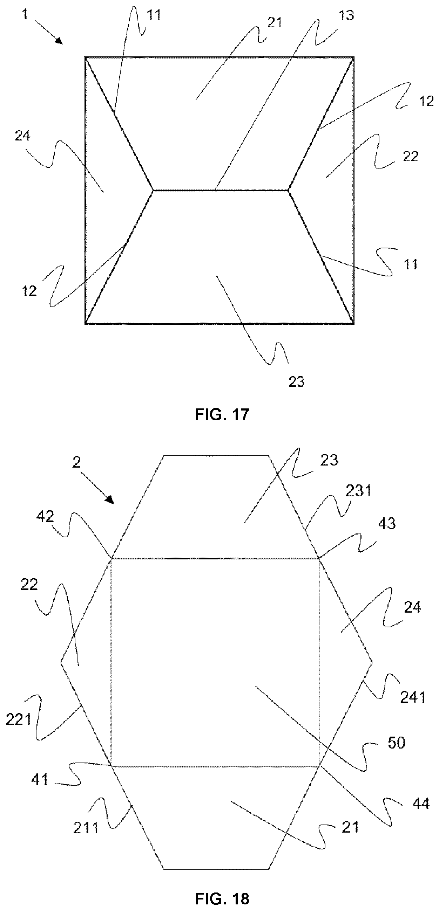

Figure 17 shows a blank image 1 used in a sixth embodiment of the method of the invention. In the sixth embodiment of the method of the invention, the image 1 of Figure 17 is used by way of illustration.

In the division step 101 of the sixth embodiment of the method of the invention, the image 1 shown in Figure 17 is divided into four portions 21, 22, 23, 24 by means of a first cutting line 11 and a second cutting line 12 which intersect one another. Said first cutting line 11 and second cutting line 12 intersect one another at least at one point of the image 1 located inside the contour of the image 1. Each portion 21, 22, 23, 24 comprises a part of the image 1 and an inner contour 211, 221, 231, 241 generated by the cutting lines 11, 12.

In the displacement step 102 of the sixth embodiment of the invention, each portion 21, 22, 23, 24 is displaced linearly to a diametrically opposite position giving rise to a rapport 2, such that the rapport 2 comprises a closed contour 3 formed by the inner contours 211, 221, 231, 241 of portions 21, 22, 23, 24, as shown in Figure 18.

In the rapport 2 obtained once portions 21, 22, 23, 24 have been displaced in the displacement step 102 of the sixth embodiment of the method of the invention, each portion 21, 22, 23, 24 is joined to each adjacent portion 21, 22, 23, 24 at a single point 41, 42, 43, 44, said point 41, 42, 43, 44 being located on the closed contour 3, as shown in Figure 18.

In the sixth embodiment, the method of the invention comprises a filling step 106 after the displacement step 102 in which an area 50 arranged inside the closed contour 3 in which there is not arranged any portion 21, 22, 23, 24 is filled with an image such that there is continuity between the image of said area 50 and the parts of the image 1 of portions 21, 22, 23, 24.

In the sixth embodiment, the first cutting line 11 and the second cutting line 12 have a common segment 13. In said embodiment, the first cutting line 11 and the second cutting line 12, in addition to intersecting one another, have a common segment 13.

Figure 20 shows the flowchart of the fourth and fifth embodiments of the method of the invention. In other embodiments described herein, only some of these steps are reproduced.

In one embodiment of the method of the invention, the starting image 1 has a contour with an arbitrary shape, i.e., it can be formed by a plurality of straight and/or curved lines, or even have a freely drawn shape.

In one embodiment of the method of the invention, cutting line 11 and cutting line 12 have an arbitrary shape, i.e., they can be formed by a plurality of straight and/or curved lines, or even have a freely drawn shape.

In an embodiment of the method of the invention, the method is configured to generate at least two different two-dimensional rapports 2 starting from a single image 1.

## Claims

1. Computer-implemented method for generating a two-dimensional rapport (2) starting from an image (1), comprising a division step (101) in which the image (1) is divided into at least three portions (21, 22, 23, 24) by means of at least a first cutting line (11) and a second cutting line (12) which intersect one another, each portion (21, 22, 23, 24) comprising a part of the image (1) and an inner contour (211, 221, 231, 241) generated by the cutting lines (11, 12), and a displacement step (102) in which the rapport (2) is generated by displacing each portion (21, 22, 23, 24) linearly to a diametrically opposite position, such that the rapport (2) comprises a closed contour (3) formed by the inner contours (211, 221, 231, 241) of portions (21, 22, 23, 24), wherein once portions (21, 22, 23, 24) have been displaced in the displacement step (102), each portion (21, 22, 23, 24) is joined to each adjacent portion (21, 22, 23, 24) at a single point (41, 42, 43, 44), said point (41, 42, 43, 44) being located on the closed contour (3), the method comprising a filling step (106) after the displacement step (102) in which an area (50) arranged inside the closed contour (3) in which there is not arranged any portion (21, 22, 23, 24) is filled with an image such that there is continuity between the image of said area (50) and the parts of the image (1) of portions (21, 22, 23, 24).

2. Computer-implemented method according to claim 1, wherein the image (1) has a square-shaped contour, and the closed contour (3) of the rapport (2) is square-shaped.

3. Computer-implemented method according to claim 1, wherein the image (1) has a rectangular-shaped contour, and the closed contour (3) of the rapport (2) is parallelogram-shaped.

4. Computer-implemented method according to claim 1, wherein the image (1) has a curvilinear-shaped contour, and the closed contour (3) of the rapport (2) is curvilinear-shaped.

5. Computer-implemented method according to any of the preceding claims, wherein the first cutting line (11) and the second cutting line (12) are straight lines.

6. Computer-implemented method according to any of claims 1 to 4, wherein the first cutting line (11) and the second cutting line (12) are curved lines.

7. Computer-implemented method according to any of the preceding claims, wherein the first cutting line (11) and the second cutting line (12) have a common segment (13).

8. Computer-implemented method according to any of the preceding claims, comprising a first emptying step (103) after the displacement step (102) and before the filling step (106), wherein areas of portions (21, 22, 23, 24) are emptied to prevent there from being areas of said portions (21, 22, 23, 24) overlapping one another.

9. Computer-implemented method according to any of the preceding claims, comprising a second emptying step (104) after the displacement step (102) and before the filling step (106), wherein the areas of portions (21, 22, 23, 24) that are located outside of the closed contour (3) are emptied.

10. Computer-implemented method according to any of the preceding claims, comprising a third emptying step (105) after the displacement step (102) and before the filling step (106), wherein an area of a portion (21, 22, 23, 24) located inside the closed contour (3) is emptied.

11. Computer (500) comprising a processor (502), a memory element (504), storage (506), a bus (508), a network processing unit (510) interconnected with at least one network input/output (I/O) interface (512), an I/O interface (514), and a computer program, the computer program being stored in the memory element (504), and the computer program comprising a plurality of instructions which, when executed by the processor (502), cause the processor (502) to execute the steps of the method according to any of claims 1 to 10.

12. Storage means comprising a computer program, the computer program comprising a plurality of instructions which, when executed by a processor (502) of a computer (500), cause the processor (502) to execute the steps of the method according to any of claims 1 to 10.

## Patentansprüche

1. Computerimplementiertes Verfahren zum Erzeugen eines zweidimensionalen Rapports (2) ausgehend von einem Bild (1), umfassend einen Unterteilungsschritt (101), in dem das Bild (1) mittels mindestens einer ersten Schnittlinie (11) und einer zweiten Schnittlinie (12), die sich gegenseitig schneiden, in mindestens drei Abschnitte (21, 22, 23, 24) unterteilt wird, wobei jeder Abschnitt (21, 22, 23, 24) einen Teil des Bildes (1) und eine innere Kontur (211, 221, 231, 241) umfasst, die durch die Schnittlinien (11, 12) erzeugt wird, und einen Verschiebungsschritt (102), in dem der Rapport (2) erzeugt wird, indem jeder Abschnitt (21, 22, 23, 24) linear in eine diametral entgegengesetzte Position verschoben wird, sodass der Rapport (2) eine geschlossene Kontur (3) umfasst, die durch die inneren Konturen (211, 221, 231, 241) der Abschnitte (21, 22, 23, 24) gebildet wird, wobei, sobald die Abschnitte (21, 22, 23, 24) im Verschiebungsschritt (102) verschoben wurden, jeder Abschnitt (21, 22, 23, 24) an einem einzigen Punkt (41, 42, 43, 44) mit jedem benachbarten Abschnitt (21, 22, 23, 24) verbunden wird, wobei sich der Punkt (41, 42, 43, 44) auf der geschlossenen Kontur (3) befindet, wobei das Verfahren einen Füllschritt (106) nach dem Verschiebungsschritt (102) umfasst, in dem ein Bereich (50), der innerhalb der geschlossenen Kontur (3) angeordnet ist und in dem kein Abschnitt (21, 22, 23, 24) angeordnet ist, mit einem Bild gefüllt wird, sodass eine Kontinuität zwischen dem Bild des Bereichs (50) und den Teilen des Bildes (1) der Abschnitte (21, 22, 23, 24) besteht.

2. Computerimplementiertes Verfahren nach Anspruch 1, wobei das Bild (1) eine quadratisch geformte Kontur aufweist und die geschlossene Kontur (3) des Rapports (2) quadratisch geformt ist.

3. Computerimplementiertes Verfahren nach Anspruch 1, wobei das Bild (1) eine rechteckig geformte Kontur aufweist und die geschlossene Kontur (3) des Rapports (2) parallelogrammförmig ist.

4. Computerimplementiertes Verfahren nach Anspruch 1, wobei das Bild (1) eine kurvenförmige Kontur aufweist und die geschlossene Kontur (3) des Rapports (2) kurvenförmig ist.

5. Computerimplementiertes Verfahren nach einem der vorhergehenden Ansprüche, wobei die erste Schnittlinie (11) und die zweite Schnittlinie (12) gerade Linien sind.

6. Computerimplementiertes Verfahren nach einem der Ansprüche 1 bis 4, wobei die erste Schnittlinie (11) und die zweite Schnittlinie (12) gekrümmte Linien sind.

7. Computerimplementiertes Verfahren nach einem der vorhergehenden Ansprüche, wobei die erste Schnittlinie (11) und die zweite Schnittlinie (12) ein gemeinsames Segment (13) aufweisen.

8. Computerimplementiertes Verfahren nach einem der vorhergehenden Ansprüche, umfassend einen ersten Entleerungsschritt (103) nach dem Verschiebungsschritt (102) und vor dem Füllschritt (106), wobei Bereiche von Abschnitten (21, 22, 23, 24) entleert werden, um zu verhindern, dass sich Bereiche der Abschnitte (21, 22, 23, 24) gegenseitig überlappen.

9. Computerimplementiertes Verfahren nach einem der vorhergehenden Ansprüche, umfassend einen zweiten Entleerungsschritt (104) nach dem Verschiebungsschritt (102) und vor dem Füllschritt (106), wobei die Bereiche von Abschnitten (21, 22, 23, 24), die sich außerhalb der geschlossenen Kontur (3) befinden, entleert werden.

10. Computerimplementiertes Verfahren nach einem der vorhergehenden Ansprüche, umfassend einen dritten Entleerungsschritt (105) nach dem Verschiebungsschritt (102) und vor dem Füllschritt (106), wobei ein Bereich eines Abschnitts (21, 22, 23, 24), der sich innerhalb der geschlossenen Kontur (3) befindet, entleert wird.

11. Computer (500) umfassend einen Prozessor (502), ein Speicherelement (504), einen Speicher (506), einen Bus (508), eine Netzwerkverarbeitungseinheit (510), die mit mindestens einer Netzwerkeingangs-/Ausgangs(I/O)-Schnittstelle (512) verbunden ist, eine I/O-Schnittstelle (514) und ein Computerprogramm, wobei das Computerprogramm im Speicherelement (504) gespeichert ist, und wobei das Computerprogramm eine Vielzahl von Anweisungen umfasst, die, wenn sie vom Prozessor (502) ausgeführt werden, den Prozessor (502) veranlassen, die Schritte des Verfahrens nach einem der Ansprüche 1 bis 10 auszuführen.

12. Speichermittel, umfassend ein Computerprogramm, wobei das Computerprogramm eine Vielzahl von Anweisungen umfasst, die, wenn sie von einem Prozessor (502) eines Computers (500) ausgeführt werden, den Prozessor (502) veranlassen, die Schritte des Verfahrens nach einem der Ansprüche 1 bis 10 auszuführen.

## Revendications

1. Procédé mis en œuvre par ordinateur pour générer un rapport bidimensionnel (2) à partir d'une image (1), comprenant une étape de division (101) dans laquelle l'image (1) est divisée en au moins trois parties (21, 22, 23, 24) au moyen d'au moins une première ligne de découpe (11) et une seconde ligne de découpe (12) qui se croisent, chaque partie (21, 22, 23, 24) comprenant une partie de l'image (1) et un contour intérieur (211, 221, 231, 241) généré par les lignes de découpe (11, 12), et une étape de déplacement (102) dans laquelle le rapport (2) est généré en déplaçant linéairement chaque partie (21, 22, 23, 24) vers une position diamétralement opposée, de telle sorte que le rapport (2) comprend un contour fermé (3) formé par les contours intérieurs (211, 221, 231, 241) des parties (21, 22, 23, 24), dans lequel, une fois que les parties (21, 22, 23, 24) ont été déplacées lors de l'étape de déplacement (102), chaque partie (21, 22, 23, 24) est reliée à chaque partie adjacente (21, 22, 23, 24) en un point unique (41, 42, 43, 44), ledit point (41, 42, 43, 44) étant situé sur le contour fermé (3), le procédé comprenant une étape de remplissage (106), postérieure à l'étape de déplacement (102), dans laquelle une zone (50) agencée à l'intérieur du contour fermé (3), dans laquelle aucune partie (21, 22, 23, 24) n'est agencée, est remplie avec une image de telle sorte qu'il existe une continuité entre l'image de ladite zone (50) et les parties de l'image (1) des parties (21, 22, 23, 24).

2. Procédé mis en œuvre par ordinateur selon la revendication 1, dans lequel l'image (1) présente un contour de forme carrée et le contour fermé (3) du rapport (2) présente une forme carrée.

3. Procédé mis en œuvre par ordinateur selon la revendication 1, dans lequel l'image (1) présente un contour de forme rectangulaire et le contour fermé (3) du rapport (2) présente une forme de parallélogramme.

4. Procédé mis en œuvre par ordinateur selon la revendication 1, dans lequel l'image (1) présente un contour de forme curviligne et le contour fermé (3) du rapport (2) présente une forme curviligne.

5. Procédé mis en œuvre par ordinateur selon l'une quelconque des revendications précédentes, dans lequel la première ligne de découpe (11) et la seconde ligne de découpe (12) sont des lignes droites.

6. Procédé mis en œuvre par ordinateur selon l'une quelconque des revendications 1 à 4, dans lequel la première ligne de découpe (11) et la seconde ligne de découpe (12) sont des lignes courbes.

7. Procédé mis en œuvre par ordinateur selon l'une quelconque des revendications précédentes, dans lequel la première ligne de découpe (11) et la seconde ligne de découpe (12) présentent un segment commun (13).

8. Procédé mis en œuvre par ordinateur selon l'une quelconque des revendications précédentes, comprenant une première étape d'évidement (103), postérieure à l'étape de déplacement (102) et antérieure à l'étape de remplissage (106), dans laquelle des zones des parties (21, 22, 23, 24) sont évidées afin d'empêcher que des zones desdites parties (21, 22, 23, 24) ne se chevauchent.

9. Procédé mis en œuvre par ordinateur selon l'une quelconque des revendications précédentes, comprenant une deuxième étape d'évidement (104), postérieure à l'étape de déplacement (102) et antérieure à l'étape de remplissage (106), dans laquelle les zones des parties (21, 22, 23, 24) qui sont situées à l'extérieur du contour fermé (3) sont évidées.

10. Procédé mis en œuvre par ordinateur selon l'une quelconque des revendications précédentes, comprenant une troisième étape d'évidement (105), postérieure à l'étape de déplacement (102) et antérieure à l'étape de remplissage (106), dans laquelle une zone d'une partie (21, 22, 23, 24) située à l'intérieur du contour fermé (3) est évidée.

11. Ordinateur (500) comprenant un processeur (502), un élément de mémoire (504), une mémoire de stockage (506), un bus (508), une unité de traitement de réseau (510) interconnectée avec au moins une interface d'entrée/sortie (E/S) de réseau (512), une interface d'E/S (514) et un programme informatique, le programme informatique étant stocké dans l'élément de mémoire (504) et comprenant une pluralité d'instructions qui, lorsqu'elles sont exécutées par le processeur (502), amènent le processeur (502) à exécuter les étapes du procédé selon l'une quelconque des revendications 1 à 10.

12. Moyens de stockage comprenant un programme informatique, le programme informatique comprenant une pluralité d'instructions qui, lorsqu'elles sont exécutées par un processeur (502) d'un ordinateur (500), amènent le processeur (502) à exécuter les étapes du procédé selon l'une quelconque des revendications 1 à 10.
